# EUROPEAN PATENT APPLICATION

(11) **EP 3 089 374 A1**
(43) Date of publication of application: **02.11.2016**
(21) Application number: 15189779.0
(22) Date of filing: 14.10.2015
(51) Int. Cl.: H04B 5/00, H02J 50/00, H02J 7/02, H02J 5/00

(54) **THIN-FILM COIL ASSEMBLY, FLEXIBLE WIRELESS CHARGING DEVICE AND WIRELESS CHARGING SYSTEM**

(30) Priority: 30.04.2015 TW 104113889
(71) Applicant: JTOUCH Corporation, Taoyuan County 32063 (TW)
(72) Inventor: Yeh, Yu-Chou, 32063 Jhongli City, Taoyuan County (TW); Yeh, Tsung-Her, 32063 Jhongli City, Taoyuan County (TW); Wu, Chen-Chi, 32063 Jhongli City, Taoyuan County (TW); Yeh, Chun-Ting, 32063 Jhongli City, Taoyuan County (TW); Huang, Hsueh-Jung, 32063 Jhongli City, Taoyuan County (TW); Cheng, Bo-Ruei, 32063 Jhongli City, Taoyuan County (TW); Hu, Chih-Ming, 32063 Jhongli City, Taoyuan County (TW); Tsui, Chiu-Cheng, 32063 Jhongli City, Taoyuan County (TW)
(74) Representative: 2K Patentanwälte Blasberg Kewitz & Reichel

(57) **Abstract**

A thin-film coil assembly (21, 31) includes a flexible substrate (211, 311), an oscillation starting antenna (212, 312), a resonant antenna (213, 313), a first protective layer (214, 314) and a second protective layer (215, 315). The flexible substrate (211, 311) has a first surface (211a) and a second surface (211b) opposed to the first surface (211a). The oscillation starting antenna (212, 312) is disposed on the first surface (211a) of the flexible substrate (211, 311). The resonant antenna (213, 313) is disposed on the second surface (211b) of the flexible substrate (211, 311). Moreover, at least one capacitor (216) is connected between a first end (213a) and a second end (213b) of the resonant antenna (213, 313). An electromagnetic wave with a specified resonant frequency is emitted or received by the thin-film coil assembly (21, 31) in response to a resonant coupling effect of the resonant antenna (213, 313) and the oscillation starting antenna (212, 312). The first protective layer (214, 314) covers the oscillation starting antenna (212, 312). The second protective layer (215, 315) covers the resonant antenna (213, 313).

## Description

### FIELD OF THE INVENTION

The present invention relates to a coil assembly, a charging device and a charging system, and more particularly to a thin-film coil assembly, a flexible wireless charging device and a wireless charging system.

### BACKGROUND OF THE INVENTION

Nowadays, various portable electronic devices such as smart phones or tablet computers are widely used in our daily lives. For providing electric energy to the portable electronic device, a charging device is used to charge a built-in battery of the portable electronic device. Generally, the charging devices are classified into wired charging devices and wireless charging devices. Since the wireless charging device can be operated in various environments and not restricted by the power cable, the wired charging device is gradually replaced by the wireless charging device.

The wireless charging operation is also referred as an inductive charging operation or a non-contact charging operation. By the wireless charging technology, electric energy is transmitted from a power-providing device to a power-receiving device in a wireless transmission manner. Generally, three wireless power charging groups include WPC (Wireless Power Consortium) (QI), PMA (Power Matters Alliance) and A4WP (Alliance for Wireless Power). The WPC and A4WP standards are the mainstreams of the wireless charging technologies. The wireless charging technologies comprise a magnetic induction (low frequency) technology and a magnetic resonance (high frequency) technology. The magnetic induction technology is only applied to short-distance energy transmission. The power conversion efficiency of the magnetic induction technology is higher. However, since the power-receiving device should be aligned with and attached on the power-providing device according to the magnetic induction technology, the power-providing device cannot charge plural power-receiving devices simultaneously. By the magnetic resonance technology, the energy transmission between a transmitter terminal and a receiver terminal is implemented at a specified resonant frequency. Consequently, the magnetic resonance technology can be applied to the longer-distance energy transmission when compared with the magnetic induction technology.

Regardless of whether the magnetic induction technology or the magnetic resonance technology is adopted, the wireless charging device has a transmitter coil assembly. The transmitter coil assembly is usually made of copper foil and formed on a rigid substrate. Moreover, the transmitter coil assembly is disposed within a casing. In other words, the shape of the thin-film coil assembly cannot be changed according to the practical requirements and the operating environments. Conventionally, only a side of the wireless charging device is capable of charging the power-receiving device. Consequently, the applications of the wireless charging device are restricted.

Moreover, the current wireless charging devices are operated by different technologies. Consequently, the coupling frequencies of the coil assemblies and the transmitter terminal circuits are usually different. Under this circumstance, the components of the wireless charging devices and the components of the power-receiving devices are possibility incompatible. Due to the incompatibility, the coil assemblies and the circuitry components of different wireless charging devices are usually different. Consequently, the wireless charging device is customized according to the type of the portable electronic device. Under this circumstance, the applications of the wireless charging device are restricted and the universality of the wireless charging device is reduced. Moreover, in case that the wireless charging device has multiple coils, it is not necessary to position the wireless receiving terminal of the power-receiving device. However, the wireless charging device with multiple coils is difficultly designed and fabricated. Moreover, the arrangement of the multiple coils will increase the overall thickness of the wireless charging device. Moreover, due to the interference of the multiple coils, the wireless charging efficiency of the wireless charging device is deteriorated.

### SUMMARY OF THE INVENTION

It is an object of the present invention to provide an enhanced flexible wireless charging device and thin-film coil assembly for this purpose. It is a further object of the present invention to provide an enhanced wireless charging system.

These problems are solved by a thin-film coil assembly according to claim 1, by a flexible wireless charging device according to claim 6 and by a wireless charging system according to claim 13. Further advantageous embodiments are the subject-matter of the dependent claims.

According to the present invention the structure of the thin-film coil assembly is flexible and slim. The shape of the thin-film coil assembly can be varied according to the practical requirements and the operating environments. Consequently, a double-side and long-distance charging function is achievable, and the wireless charging flexibility is enhanced. Moreover, the flexible wireless charging device is capable of wirelessly charging the power-receiving device without the need of positioning the wireless receiving terminal of the power-receiving device.

According to a further aspect of the present invention, since the flexible wireless charging device and the thin-film coil assembly are cost-effective due to the simplified structures and can be operated at a wider frequency and bandwidth range, the applications are enhanced. Moreover, the flexible wireless charging device and the thin-film coil assembly can avoid the interference of the multiple coils, and thus the charging efficiency is enhanced.

The wireless charging system according to the present invention comprises a flexible wireless charging device and a power-receiving device. Due to a magnetic resonant coupling effect, the power-receiving device is wirelessly charged by the flexible wireless charging device, so that the above-mentioned objects can be achieved.

In accordance with an aspect of the present invention, there is provided a thin-film coil assembly. The thin-film coil assembly includes a flexible substrate, an oscillation starting antenna, a resonant antenna, a first protective layer and a second protective layer. The flexible substrate has a first surface and a second surface. The first surface and the second surface are opposed to each other. The oscillation starting antenna is disposed on the first surface of the flexible substrate. The resonant antenna is disposed on the second surface of the flexible substrate. Moreover, at least one capacitor is connected between a first end and a second end of the resonant antenna. An electromagnetic wave with a specified resonant frequency is emitted or received by the thin-film coil assembly in response to a resonant coupling effect of the resonant antenna and the oscillation starting antenna. The first protective layer covers the oscillation starting antenna. The second protective layer covers the resonant antenna.

In accordance with a further aspect of the present invention, there is provided a flexible wireless charging device for wirelessly charging a power-receiving device. The flexible wireless charging device includes a thin-film coil assembly and at least one transmitter module. The thin-film coil assembly includes a flexible substrate, an oscillation starting antenna, a resonant antenna, a first protective layer and a second protective layer. The flexible substrate has a first surface and a second surface. The first surface and the second surface are opposed to each other. The oscillation starting antenna is disposed on the first surface of the flexible substrate. The resonant antenna is disposed on the second surface of the flexible substrate. Moreover, at least one capacitor is connected between a first end and a second end of the resonant antenna. The first protective layer covers the oscillation starting antenna. The second protective layer covers the resonant antenna. The at least one transmitter module is electrically connected between the thin-film coil assembly and a power source. The at least one transmitter module receives electric energy from the power source and provides an AC signal to the thin-film coil assembly. The AC signal is received by the oscillation starting antenna of the thin-film coil assembly. An electromagnetic wave with a specified resonant frequency is emitted in response to a resonant coupling effect of the resonant antenna and the oscillation starting antenna, so that the power-receiving device is wirelessly charged by the flexible wireless charging device.

In accordance with a further aspect of the present invention, there is provided a wireless charging system. The wireless charging system includes a flexible wireless charging device and a power-receiving device. The flexible wireless charging device includes a thin-film transmitter coil assembly and at least one transmitter module. The thin-film transmitter coil assembly includes a flexible substrate, an oscillation starting antenna, a resonant antenna, a first protective layer and a second protective layer. The flexible substrate has a first surface and a second surface opposed to the first surface. The oscillation starting antenna is disposed on the first surface of the flexible substrate. The resonant antenna is disposed on the second surface of the flexible substrate. Moreover, at least one capacitor is connected between a first end and a second end of the resonant antenna. The oscillation starting antenna is covered by the first protective layer. The resonant antenna is covered by the second protective layer. The at least one transmitter module is electrically connected between the thin-film transmitter coil assembly and a power source. The at least one transmitter module receives electric energy from the power source and provides an AC signal to the thin-film transmitter coil assembly. The AC signal is received by the oscillation starting antenna of the thin-film coil assembly. An electromagnetic wave with a specified resonant frequency is emitted in response to a resonant coupling effect of the resonant antenna and the oscillation starting antenna. The power-receiving device includes a thin-film receiver coil assembly and a receiver module. The thin-film receiver coil assembly receives electric energy from the flexible wireless charging device in response to a magnetic resonant coupling effect of the thin-film receiver coil assembly and the thin-film transmitter coil assembly. The receiver module is connected with the thin-film receiver coil assembly for converting the electric energy that is received by the thin-film receiver coil assembly.

The above contents of the present invention will become more readily apparent to those ordinarily skilled in the art after reviewing the following detailed description and accompanying drawings, in which:

### BRIEF DESCRIPTION OF THE DRAWINGS

- FIG. 1: schematically illustrates the architecture of a wireless charging system according to an embodiment of the present invention;
- FIG. 2A: is a schematic exploded view illustrating a thin-film transmitter coil assembly of a flexible wireless charging device of FIG .1;
- FIG. 2B: is a schematic exploded view illustrating a variant example of the thin-film transmitter coil assembly of the flexible wireless charging device of FIG. 1;
- FIG. 2C: is a schematic exploded view illustrating a variant example of the thin-film transmitter coil assembly of the flexible wireless charging device of FIG. 1;
- FIG. 3: is a schematic circuit block diagram illustrating a transmitter module of the flexible wireless charging device of the wireless charging system according to the embodiment of the present invention;
- FIG. 4: schematically illustrates an example of the shielding structure as shown in FIG. 2B;
- FIG. 5A: is a schematic exploded view illustrating a thin-film receiver coil assembly of the power-receiving device of FIG. 1;
- FIG. 5B: is a schematic exploded view illustrating a variant example of the thin-film receiver coil assembly of the power-receiving device of FIG. 1;
- FIG. 5C: is a schematic exploded view illustrating a variant example of the thin-film receiver coil assembly of the power-receiving device of FIG. 1;
- FIG. 6: is a schematic circuit block diagram illustrating a receiver module of the power-receiving device of the wireless charging system of FIG. 1;
- FIG. 7: schematically illustrates a first implementation example of the flexible wireless charging device;
- FIG. 8: schematically illustrates a second implementation example of the flexible wireless charging device;
- FIG. 9: schematically illustrates a third implementation example of the flexible wireless charging device; and
- FIG. 10: is a schematic perspective view illustrating a power-receiving device of the wireless charging system according to the embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

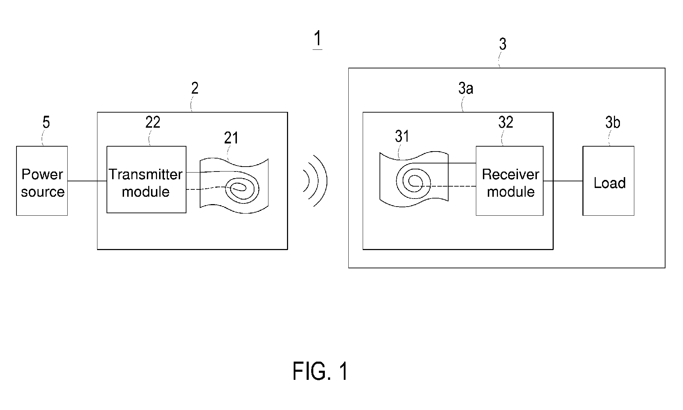

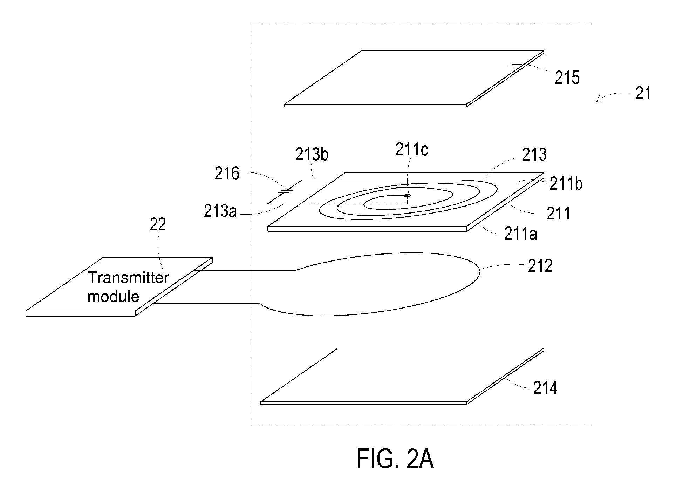

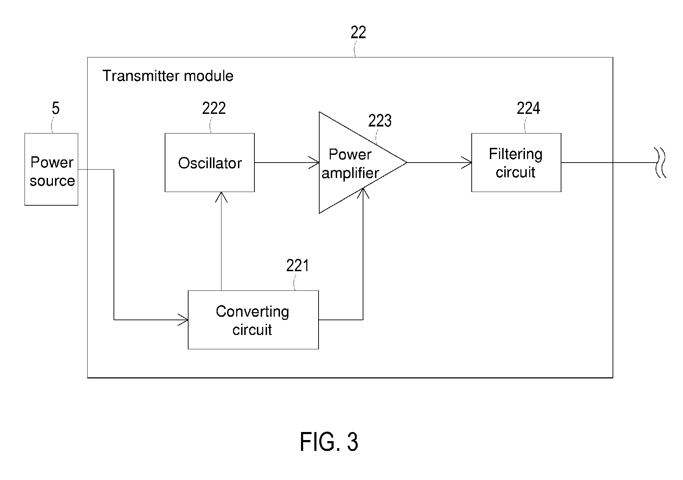

FIG. 1 schematically illustrates the architecture of a wireless charging system according to an embodiment of the present invention. FIG. 2A is a schematic exploded view illustrating a thin-film transmitter coil assembly of a flexible wireless charging device of FIG .1. FIG. 3 is a schematic circuit block diagram illustrating a transmitter module of the flexible wireless charging device of FIG.1. Please refer to FIGS. 1, 2A and 3. The wireless charging system 1 comprises a flexible wireless charging device 2 and at least one power-receiving device 3. The flexible wireless charging device 2 is connected with a power source 5. For example, the power source 5 is an AC utility power source. The flexible wireless charging device 2 emits an electromagnetic wave with a specified frequency or a specified wideband frequency (e.g., in the range between 60Hz and 300GHz) for performing a wireless charging operation on the power-receiving device 3 by a magnetic resonant coupling effect. Consequently, a double-side and long-distance charging function is achieved. For example, the power-receiving device 3 is a mobile phone, a tablet computer or an electrical product. The flexible wireless charging device 2 comprises at least one thin-film transmitter coil assembly 21 (also referred to as a thin-film coil assembly) and at least one transmitter module 22. The thin-film transmitter coil assembly 21 is electrically connected with the transmitter module 22. The thin-film transmitter coil assembly 21 is used as a transmitter terminal of the flexible wireless charging device 2. The transmitter module 22 is electrically connected between the power source 5 and the thin-film transmitter coil assembly 21 for receiving the electric energy from the power source 5 and generating an AC signal to the thin-film transmitter coil assembly 21.

Please refer to FIGS. 1 and 2A. The thin-film transmitter coil assembly 21 comprises a flexible substrate 211, an oscillation starting antenna 212, a resonant antenna 213, a first protective layer 214 and a second protective layer 215. The oscillation starting antenna 212 and the resonant antenna 213 are disposed on two opposite surfaces of the flexible substrate 211. In particular, the oscillation starting antenna 212 is disposed on a first surface 211a of the flexible substrate 211, and the resonant antenna 213 is disposed on a second surface 211b of the flexible substrate 211. Moreover, one or more capacitors 216 are connected between a first end 213a and a second end 213b of the resonant antenna 213. In this embodiment, the first end 213a of the resonant antenna 213 is penetrated through a perforation 211c of the flexible substrate 211 and projected out through the first surface 211a. The oscillation starting antenna 212 and the resonant antenna 213 are covered by the first protective layer 214 and the second protective layer 215, respectively. That is, the first protective layer 214 and the second protective layer 215 are located at the outer sides of the oscillation starting antenna 212 and the resonant antenna 213, respectively. When an AC signal from the transmitter module 22 is transmitted to the oscillation starting antenna 212 of the thin-film transmitter coil assembly 21, the electromagnetic wave emitted by the oscillation starting antenna 212 and the resonant coupling effect of the resonant antenna 213 reach the maximum response. The electromagnetic wave with the specified resonant frequency and a thin-film receiver coil assembly 31 of a wireless receiving unit 3a of the power-receiving device 3 result in a magnetic resonant coupling effect. In response to the magnetic resonant coupling effect, the electric energy received by the thin-film receiver coil assembly 31 from the flexible wireless charging device 2 is further converted into an output voltage by a receiver module 32. The output voltage is transmitted to a load 3b, so that the wireless charging operation of the power-receiving device 3 is implemented.

In some embodiments, a first adhesive layer and a second adhesive layer (not shown) are disposed on the first surface 211a and the second surface 211b of the flexible substrate 211, respectively. The oscillation starting antenna 212 and the resonant antenna 213 are made of electrically-conductive material. Moreover, the oscillation starting antenna 212 and the resonant antenna 213 are respectively fixed on the first surface 211a and the second surface 211b of the flexible substrate 211 through the corresponding adhesive layers. Each of the first adhesive layer and the second adhesive layer is made of light curable adhesive material, thermally curable adhesive material or any other appropriate curable adhesive material. The other appropriate curable adhesive material includes, but not limited to, vinyl acetate-ethylene copolymer gel, polyimide gel, rubbery gel, polyolefin gel or moisture curable polyurethane gel. In some other embodiments, the adhesive layer contains curable adhesive material and magnetic material. Preferably but not exclusively, the magnetic material is ferromagnetic powder mixed within the adhesive material. Alternatively, in some other embodiments, the flexible substrate 311 is replaced by the adhesive layers.

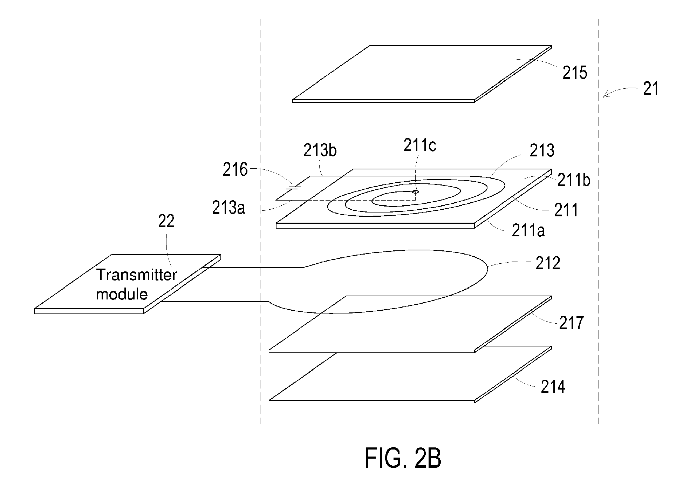

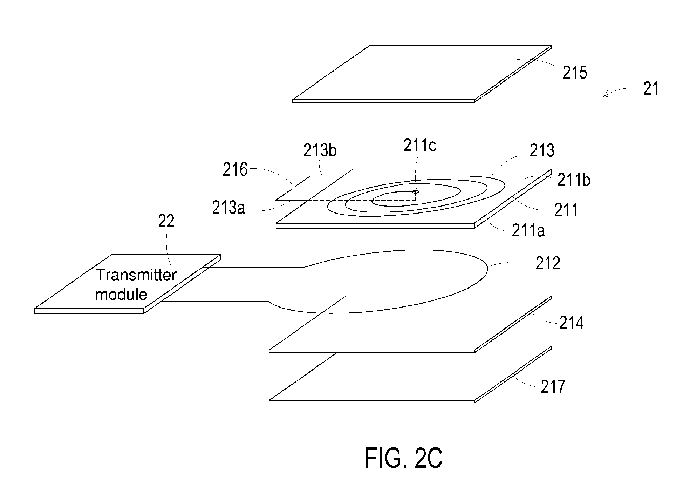

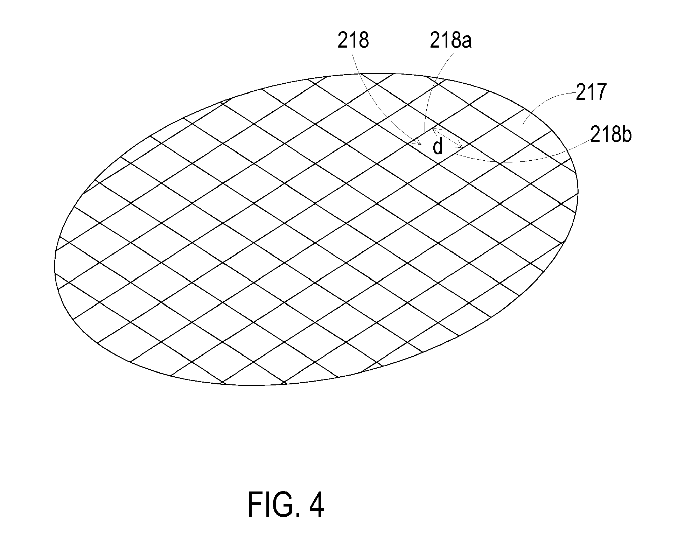

FIG. 2B is a schematic exploded view illustrating a variant example of the thin-film transmitter coil assembly of the flexible wireless charging device of FIG. 1. As shown in FIG. 2B, in some embodiment, the thin-film transmitter coil assembly 21 further comprises a shielding structure 217. The shielding structure 217 is arranged between the oscillation starting antenna 212 and the first protective layer 214 for blocking at least portion of the electromagnetic wave divergence toward a direction away from the resonant antenna 213 and increasing the gain of the electromagnetic wave. Alternatively, as shown in FIG. 2C, the shielding structure 217 of the thin-film transmitter coil assembly 21 is located at an external side of the first protective layer 214 for blocking at least portion of the electromagnetic wave divergence toward a direction away from the resonant antenna 213 and increasing the gain of the electromagnetic wave. In some embodiments, as shown in FIG. 4, the shielding structure 217 is a metal mesh for blocking the divergence of the electromagnetic wave with a higher frequency (e.g., the frequency higher than 6 MHz). The metal mesh is made of metallic material or metallic composite material selected from copper, gold, silver, aluminum, tungsten, chromium, titanium, indium, tin, nickel, iron, or a combination thereof. The pattern of the metal mesh comprises plural mesh units 218. Every two adjacent metal lines 218a and 218b of the mesh unit 218 that are not crisscrossed with each other are separated by a distance d. The distance d is shorter than a wavelength of the electromagnetic wave from the thin-film transmitter coil assembly 21. In some other embodiments, the shielding structure 217 is a magnetically-permeable film for blocking the divergence of the electromagnetic wave with a lower frequency and increasing the gain of the electromagnetic wave. The magnetically-permeable film is made of soft magnetic material. Preferably but not exclusively, the soft magnetic material is a mixture of ferrite, zinc-nickel ferrite, zinc-manganese ferrite or iron-silicon-aluminum alloy and adhesive material. The magnetically-permeable film is used for blocking the electromagnetic wave in the range between a first frequency and a second frequency (e.g., in the range between 60Hz and 20MHz). In another embodiment, the shielding structure 217 is a composite film for blocking the divergence of the electromagnetic wave with wideband frequency (e.g., in the range between 60Hz and 300GHz) and increasing the gain of the electromagnetic wave. For example, the composite film is a combination of a metal mesh and a magnetically-permeable film. In some embodiments, the oscillation starting antenna 212 and the resonant antenna 213 are single-loop antennas or multi-loop antennas. Moreover, the oscillation starting antenna 212 and the resonant antenna 213 have circular shapes, elliptic shapes or rectangular shapes.

In some embodiments, the flexible substrate 211 is made of polyethylene terephthalate (PET), thin glass, polyethylennaphthalat (PEN), polyethersulfone (PES), polymethylmethacrylate (PMMA), polyimide (PI) or polycarbonate (PC). The electrically-conductive material of the oscillation starting antenna 212 and the resonant antenna 213 includes but is not limited to silver (Ag), copper (Cu), gold (Au), aluminum (Al), tin (Sn) or graphene. Moreover, the first protective layer 214 and the second protective layer 215 are made of protective paint. An example of the protective paint includes but is not limited to epoxy resin, acrylic silicone, polyurethane rubber, vinyl acetate-ethylene copolymer gel, polyimide gel, rubbery gel, polyolefin gel, moisture curable polyurethane gel or silicone.

Please refer to FIGS. 1, 2A and 3. In some embodiments, the flexible wireless charging device 2 comprises at least one transmitter module 22. Each transmitter module 22 comprises a converting circuit 221, an oscillator 222, a power amplifier 223 and a filtering circuit 224. The input end of the converting circuit 221 is electrically connected with the power source 5. The output end of the converting circuit 221 is electrically connected with the oscillator 222 and the power amplifier 223. The converting circuit 221 is used for converting the electric energy from the power source 5 and providing the regulated voltage to the oscillator 222 and the power amplifier 223. For example, the converting circuit 221 comprises a DC-to-DC converter, an AC-to-AC converter and/or a DC-to-AC convertor. The oscillator 222 is used for adjustably outputting an AC signal with a specified frequency. The AC signal with the specified frequency is amplified by the power amplifier 223. The resonant wave and the undesired frequency of the AC signal are filtered by the filtering circuit 224. The filtered AC signal is transmitted to the oscillation starting antenna 212 of the thin-film transmitter coil assembly 21.

The power-receiving device 3 comprises the wireless receiving unit 3a and the load 3b. The wireless receiving unit 3a and the load 3b are separate components or integrated into a single component. For example, the wireless receiving unit 3a is a wireless receiver pad, and the load 3b is a mobile phone without the function of being wirelessly charged. However, while the wireless receiver pad and the mobile phone are electrically connected with each other, the mobile phone can be wirelessly charged. Alternatively, in another embodiment, the wireless receiving unit 3a is disposed within a casing of the load 3b (e.g., the mobile phone).

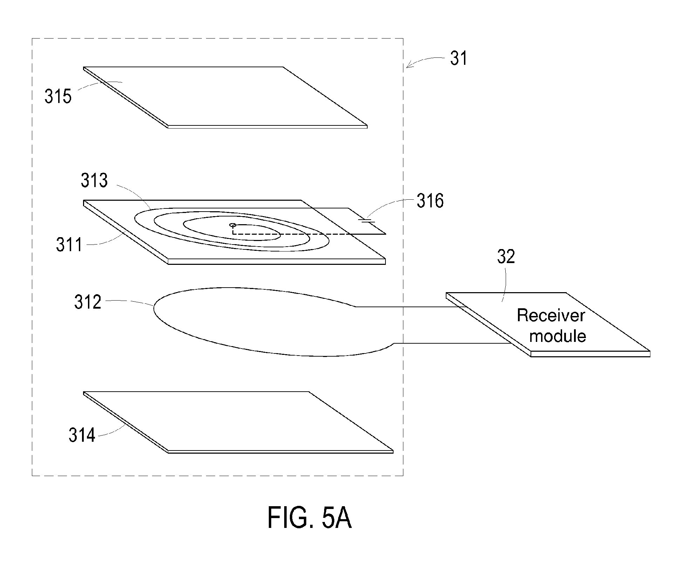

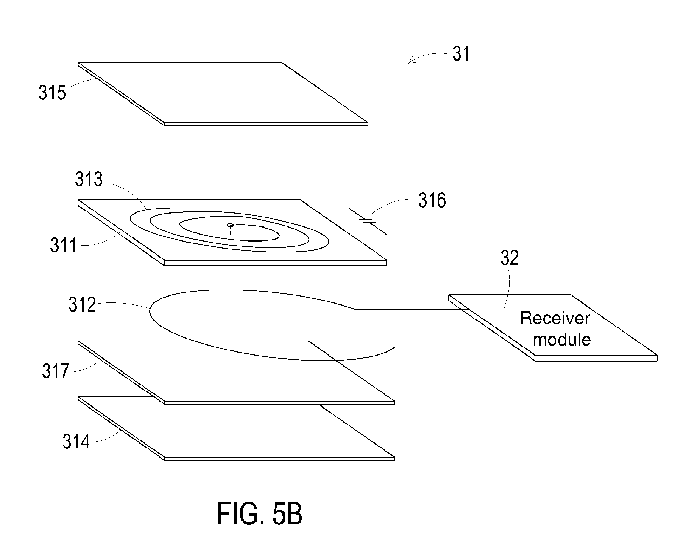

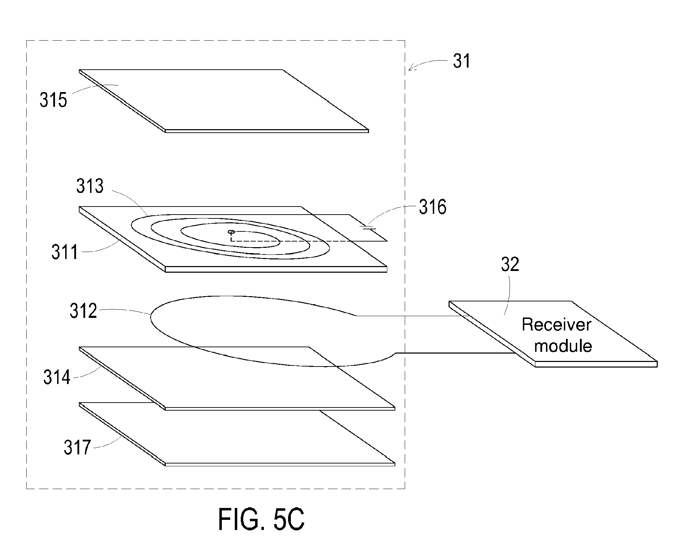

FIG. 5A is a schematic exploded view illustrating a thin-film receiver coil assembly of the power-receiving device of FIG. 1. As shown in FIGS. 1 and 5A, in some embodiments, the wireless receiving unit 3a of the power-receiving device 3 comprises the thin-film receiver coil assembly 31 and the receiver module 32. Like the thin-film transmitter coil assembly 21, the thin-film receiver coil assembly 31 comprises a flexible substrate 311, an oscillation starting antenna 312, a resonant antenna 313, a first protective layer 314 and a second protective layer 315. At least one capacitor 316 is connected between a first end and a second end of the resonant antenna 313. The structures, materials and functions of the flexible substrate 311, the oscillation starting antenna 312, the resonant antenna 313, the first protective layer 314 and the second protective layer 315 of the thin-film receiver coil assembly 31 are similar with those of the flexible substrate 211, the oscillation starting antenna 212, the resonant antenna 213, the first protective layer 214 and the second protective layer 215 of the thin-film transmitter coil assembly 21. The detailed structures of these components are not redundantly described herein. In some embodiment, as shown in FIGS. 5B and 5C, the thin-film receiver coil assembly 31 further includes a shielding structure 317. The structures, materials and functions of the shielding structure 317 are similar with those of the shielding structure 217 of the thin-film transmitter coil assembly 21. The detailed structures of the shielding structure 317 are not redundantly described herein.

Due to the resonant coupling effect between the thin-film receiver coil assembly 31 and the thin-film transmitter coil assembly 21, the electromagnetic wave with a specified resonant frequency emitted from the thin-film transmitter coil assembly 21 of the flexible wireless charging device 2 can be received by the thin-film receiver coil assembly 31. In particular, when the specified resonant frequency F of the thin-film transmitter coil assembly 21 and the resonant frequency of the thin-film receiver coil assembly 31 are identical and the wireless receiving unit 3a is located within a chargeable distance D of the flexible wireless charging device 2, the electric energy can be transmitted from the thin-film transmitter coil assembly 21 of the flexible wireless charging device 2 to the thin-film receiver coil assembly 31 of the wireless receiving unit 3a. For example, in case that the specified resonant frequency F is 900MHz, the chargeable distance D of the flexible wireless charging device 2 is about 15 meters. In case that the specified resonant frequency F is 6MHz, the chargeable distance D of the flexible wireless charging device 2 is about 3 meters to 5 meters. In case that the specified resonant frequency F is 100kHz, the chargeable distance D of the flexible wireless charging device 2 is about 1 centimeter. It is noted that the values of the specified resonant frequency F and the chargeable distance D are presented herein for purpose of illustration and description only.

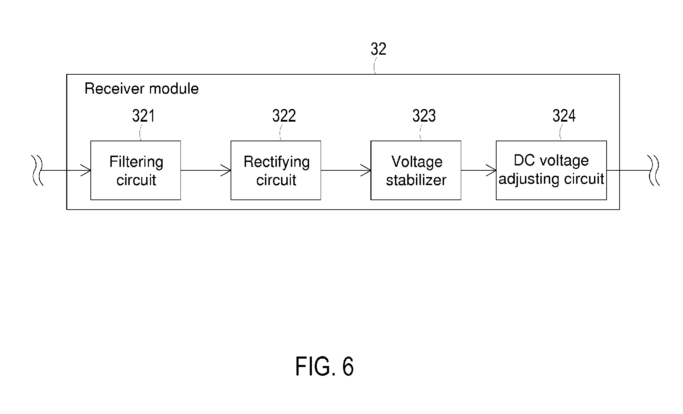

FIG. 6 is a schematic circuit block diagram illustrating a receiver module of the power-receiving device of the wireless charging system of FIG. 1. As shown in FIGS. 1 and 6, the wireless receiving unit 3a comprises at least one receiver module 32. Each receiver module 32 comprises a filtering circuit 321, a rectifying circuit 322, a voltage stabilizer 323 and a DC voltage adjusting circuit 324. The filtering circuit 321 is electrically connected with the oscillation starting antenna 312 of the thin-film receiver coil assembly 31. The resonant wave of the AC signal from the oscillation starting antenna 312 of the thin-film receiver coil assembly 31 is filtered by the filtering circuit 321. The rectifying circuit 322 is electrically connected with the filtering circuit 321 and the voltage stabilizer 323 for converting the AC signal into a rectified DC voltage. The voltage stabilizer 323 is electrically connected with the rectifying circuit 322 and the DC voltage adjusting circuit 324 for stabilizing the rectified DC voltage to a stabilized DC voltage with a rated voltage value. The DC voltage adjusting circuit 324 is electrically connected with the voltage stabilizer 323 and the load 3b for adjusting (e.g., boosting) the stabilized DC voltage to a regulated DC voltage. The regulated DC voltage is provided to the load 3b to charge the load 3b (e.g., the battery of the mobile phone).

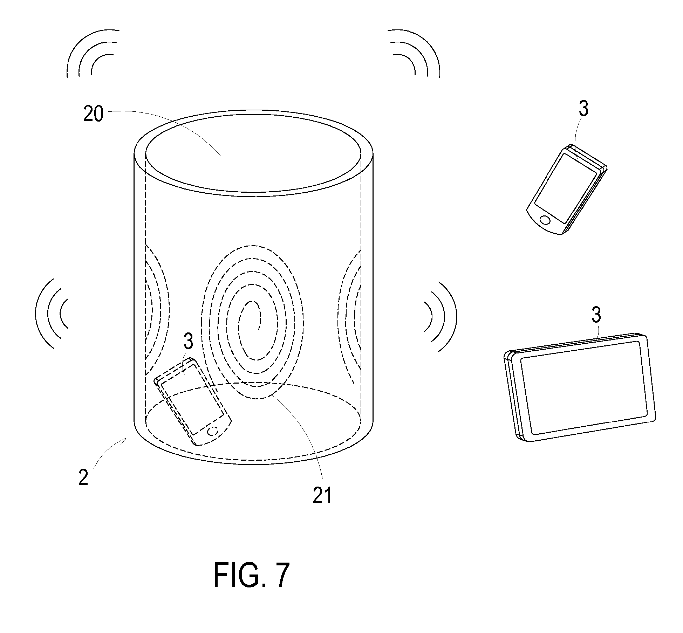

FIG. 7 schematically illustrates a first implementation example of the flexible wireless charging device. As shown in FIG. 7, in this embodiment, the flexible wireless charging device 2 is bent to have a sleeve structure with an accommodation space 20. That is, the shape of the thin-film transmitter coil assembly 21 of the flexible wireless charging device 2 is changeable according to the practical requirements. Since the thin-film transmitter coil assembly 21 has the double-side charging function, the power-receiving device 3 that is located within the accommodation space 20 or located near the flexible wireless charging device 2 can be wirelessly charged by the flexible wireless charging device 2.

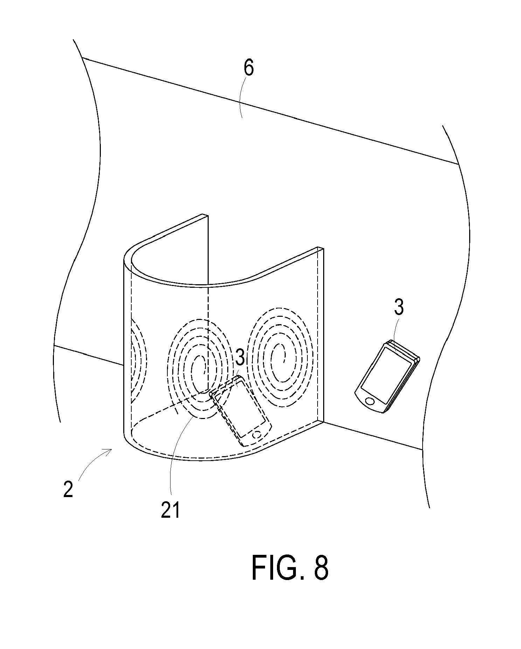

FIG. 8 schematically illustrates a second implementation example of the flexible wireless charging device. In this embodiment, the flexible wireless charging device 2 is bent to have a U-shaped structure. The U-shaped structure may be attached on a wall 6. That is, the shape of the thin-film transmitter coil assembly 21 of the flexible wireless charging device 2 is changeable according to the practical requirements. Since the thin-film transmitter coil assembly 21 has the double-side charging function, the power-receiving device 3 that is located within the U-shaped structure or located near the flexible wireless charging device 2 can be wirelessly charged by the flexible wireless charging device 2.

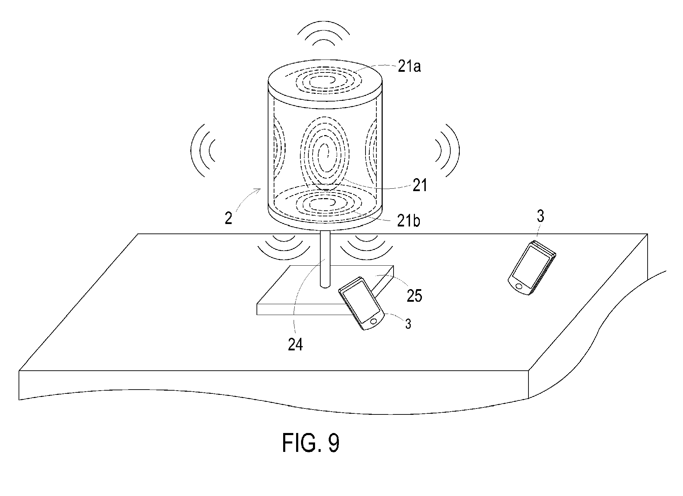

FIG. 9 schematically illustrates a third implementation example of the flexible wireless charging device. As shown in FIG. 9, the flexible wireless charging device 2 further comprises two additional thin-film transmitter coil assemblies 21a and 21b connected with the two edges of the thin-film transmitter coil assembly 21, respectively. The structures and operating principles of each of the thin-film transmitter coil assemblies 21a and 21b are similar to those of the thin-film transmitter coil assembly 21, and are not redundantly described herein. In this embodiment, the thin-film transmitter coil assembly 21 is bent to have a sleeve structure. The thin-film transmitter coil assemblies 21a and 21b are respectively located at a top side and a bottom side of the sleeve structure. Consequently, a cylindrical structure is defined by the thin-film transmitter coil assemblies 21, 21a and 21b collaboratively. In this embodiment, the flexible wireless charging device 2 further comprises a bracket 24 and a base 25. The bracket 24 is arranged between the cylindrical structure and the base 25 for supporting the cylindrical structure. The base 25 is connected with the bracket 24. Through the base 25, the flexible wireless charging device 2 can be placed on a flat surface. By means of the above configurations, the electromagnetic wave of the flexible wireless charging device 2 is emitted in a 3D radiation manner. Consequently, plural power-receiving devices 3 within the chargeable distance (e.g., 1 meter or longer) can be wirelessly charged by the flexible wireless charging device 2.

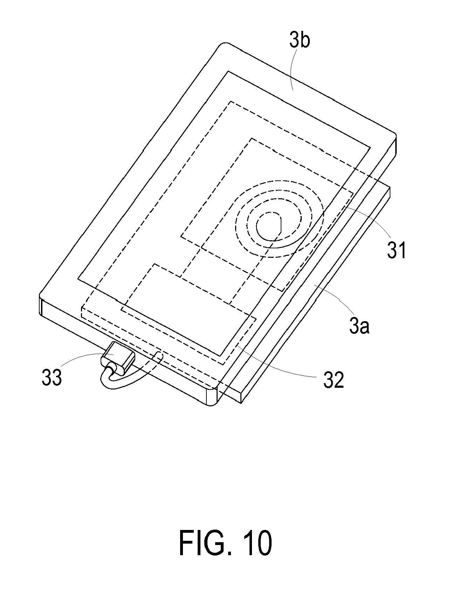

FIG. 10 is a schematic perspective view illustrating a power-receiving device of the wireless charging system of FIG .1. As shown in FIGS. 1 and 10, the power-receiving device 3 comprises the wireless receiving unit 3a and the load 3b. In this embodiment, the wireless receiving unit 3a of the power-receiving device 3 is a wireless receiver pad, and the load 3b is a mobile phone without the function of being wirelessly charged. When a connector 33 of the wireless receiving unit 3a (i.e., the wireless receiver pad) is electrically connected with a corresponding connector of the load 3b (i.e., the mobile phone), the electric energy from the thin-film transmitter coil assembly 21 of the flexible wireless charging device 2 can be received by the thin-film receiver coil assembly 31 and the receiver module 32 of the wireless receiving unit 3a. Under this circumstance, even if the mobile phone does not have the function of being wirelessly charged, the mobile phone can be wirelessly charged by the flexible wireless charging device 2 through the wireless receiving unit 3a.

From the above descriptions, the present invention provides a flexible wireless charging device and a thin-film coil assembly thereof. The structure of the thin-film coil assembly is flexible and slim. The shape of the thin-film coil assembly can be varied according to the practical requirements and the operating environments. Consequently, a double-side and long-distance charging function is achievable, and the wireless charging flexibility is enhanced. Moreover, the flexible wireless charging device of the present invention is capable of wirelessly charging the power-receiving device without the need of positioning the wireless receiving terminal of the power-receiving device. Moreover, since the flexible wireless charging device and the thin-film coil assembly of the present invention are cost-effective and can be operated at a wider frequency and bandwidth range, the applications are enhanced. Moreover, the flexible wireless charging device and the thin-film coil assembly of the present invention can avoid the interference of the multiple coils, and thus the charging efficiency is enhanced.

## Claims

1. A thin-film coil assembly (21, 31), comprising:
a flexible substrate (211, 311) having a first surface (211a) and a second surface (211b), wherein the first surface (211a) and the second surface (211b) are opposed to each other;
an oscillation starting antenna (212, 312) disposed on the first surface (211a) of the flexible substrate (211, 311);
a resonant antenna (213, 313) disposed on the second surface (211b) of the flexible substrate (211, 311), wherein at least one capacitor (216, 316) is connected between a first end (213a) and a second end (213b) of the resonant antenna (213, 313), and an electromagnetic wave with a specified resonant frequency is emitted or received by the thin-film coil assembly (21, 31) in response to a resonant coupling effect of the resonant antenna (213, 313) and the oscillation starting antenna (212, 312);
a first protective layer (214, 314) covering the oscillation starting antenna (212, 312); and
a second protective layer (215, 315) covering the resonant antenna (213, 313).

2. The thin-film coil assembly (21, 31) according to claim 1, wherein an AC signal is received by the oscillation starting antenna (212), and the electromagnetic wave with the specified resonant frequency is emitted in response to a resonant coupling effect of the resonant antenna (213) and the oscillation starting antenna (212), wherein the first end (213a) of the resonant antenna (213) is penetrated through a perforation (211c) of the flexible substrate (211) and projected out through the first surface (211a).

3. The thin-film coil assembly (21, 31) according to claim 1 or 2, further comprising a shielding structure (217, 317), wherein the shielding structure (217, 317) is arranged between the oscillation starting antenna (212, 312) and the first protective layer (214, 314) or located at an external side of the first protective layer (214, 314), wherein the shielding structure (217, 317) is a metal mesh, a magnetically-permeable film or a composite film including a combination of the metal mesh and the magnetically-permeable film, wherein the magnetically-permeable film is made of soft magnetic material, wherein the soft magnetic material is a mixture of ferrite or iron-silicon-aluminum alloy and an adhesive material, and the metal mesh is made of metallic material or metallic composite material selected from copper, gold, silver, aluminum, tungsten, chromium, titanium, indium, tin, nickel, iron, or a combination thereof

4. The thin-film coil assembly (21, 31) according to any of the preceding claims, wherein the flexible substrate (211, 311) is made of polyethylene terephthalate, thin glass, polyethylennaphthalat, polyethersulfone, polymethylmethacrylate, polyimide or polycarbonate, wherein the oscillation starting antenna (212, 312) and the resonant antenna (213, 313) are made of electrically-conductive material, and the electrically-conductive material is silver, copper, gold, aluminum, tin or graphene, wherein the first protective layer (214, 314) and the second protective layer (215, 315) are made of protective paint, and the protective paint is epoxy resin, polyurethane rubber, vinyl acetate-ethylene copolymer gel, polyimide gel, rubbery gel, polyolefin gel, or silicone.

5. The thin-film coil assembly (21, 31) according to any of claims 1 to 3, wherein the flexible substrate (211, 311) is an adhesive layer, or both the first surface (211 a) and the second surface (211b) of the flexible substrate (211, 311) include an adhesive layer, and the oscillation starting antenna (212, 312) and the resonant antenna (213, 313) are fixed on the first surface (211a) and the second surface (211b) of the flexible substrate (211, 311) through the corresponding adhesive layer, respectively, wherein the adhesive layer is made of light curable adhesive material, thermally curable adhesive material, a mixture of curable adhesive material and a magnetic element, vinyl acetate-ethylene copolymer gel, polyimide gel, rubbery gel, polyolefin gel or moisture curable polyurethane gel.

6. A flexible wireless charging device (2) for wirelessly charging a power-receiving device (3), the flexible wireless charging device (2) comprising:
at least one thin-film coil assembly (21), particularly according to any of claims 1 to 5, the thin-film coil assembly (21) comprising:
a flexible substrate (211) having a first surface (211a) and a second surface (211b), wherein the first surface (211a) and the second surface (211b) are opposed to each other;
an oscillation starting antenna (212) disposed on the first surface (211a) of the flexible substrate (211);
a resonant antenna (213) disposed on the second surface (211b) of the flexible substrate (211), wherein at least one capacitor (216) is connected between a first end (213a) and a second end (213b) of the resonant antenna (213);
a first protective layer (214) covering the oscillation starting antenna (212); and
a second protective layer (215) covering the resonant antenna (213); and
at least one transmitter module (22) electrically connected between the thin-film coil assembly (21) and a power source (5), wherein the at least one transmitter module (22) receives electric energy from the power source (5) and provides an AC signal to the thin-film coil assembly (21),
wherein the AC signal is received by the oscillation starting antenna (212) of the thin-film coil assembly (21), and an electromagnetic wave with a specified resonant frequency is emitted in response to a resonant coupling effect of the resonant antenna (213) and the oscillation starting antenna (212), so that the power-receiving device (3) is wirelessly charged by the flexible wireless charging device (2).

7. The flexible wireless charging device (2) according to claim 6, wherein the thin-film coil assembly (21) further comprises a shielding structure (217), wherein the shielding structure (217) is arranged between the oscillation starting antenna (212) and the first protective layer (214) or located at an external side of the first protective layer (214), wherein the shielding structure (217) is a metal mesh, a magnetically-permeable film or a composite film including a combination of the metal mesh and the magnetically-permeable film.

8. The flexible wireless charging device (2) according to claim 6 or 7, wherein the flexible substrate (211) is made of polyethylene terephthalate, thin glass, polyethylennaphthalat, polyethersulfone, polymethylmethacrylate, polyimide or polycarbonate, wherein the oscillation starting antenna (212) and the resonant antenna (213) are made of electrically-conductive material, and the electrically-conductive material is silver, copper, gold, aluminum, tin or graphene, wherein the first protective layer (214) and the second protective layer (215) are made of protective paint, and the protective paint is epoxy resin, polyurethane rubber, vinyl acetate-ethylene copolymer gel, polyimide gel, rubbery gel, polyolefin gel, or silicone.

9. The flexible wireless charging device (2) according to claim 6 or 7, wherein the flexible substrate (211) is an adhesive layer, or both the first surface (211a) and the second surface (211b) of the flexible substrate (211) include an adhesive layer, and the oscillation starting antenna (212) and the resonant antenna (213) are fixed on the first surface (211a) and the second surface (211b) ofthe flexible substrate (211) through the corresponding adhesive layer, respectively, wherein the adhesive layer is made of light curable adhesive material, thermally curable adhesive material, a mixture of curable adhesive material and a magnetic element, vinyl acetate-ethylene copolymer gel, polyimide gel, rubbery gel, polyolefin gel or moisture curable polyurethane gel.

10. The flexible wireless charging device (2) according to any of claims 6 to 9, wherein the thin-film coil assembly (21) is bent to have a sleeve structure or a U-shaped structure.

11. The flexible wireless charging device (2) according to any of claims 6 to 10, further comprising two additional thin-film coil assemblies (21a, 21b), wherein the thin-film coil assembly (21) is bent to have a sleeve structure, and the two additional thin-film coil assemblies (21a, 21b) are respectively located at a top side and a bottom side of the sleeve structure, so that a cylindrical structure is defined by the thin-film coil assembly (21) and the two additional thin-film coil assemblies (21a, 21b) collaboratively, and further comprising a bracket (24) and a base (25), wherein the bracket (24) is connected with the cylindrical structure, and the base (25) is connected with the bracket (24).

12. The flexible wireless charging device (2) according to any of claims 6 to 11, wherein the transmitter module (22) comprises:
a converting circuit (221) electrically connected with the power source (5) for converting the electric energy from the power source (5);
an oscillator (222) electrically connected with the converting circuit (221) for adjustably outputting the AC signal with a specified frequency;
a power amplifier (223) connected with the oscillator (222) and the converting circuit (221) for amplifying the AC signal; and
a filtering circuit (224) connected with the power amplifier (223) for filtering the AC signal.

13. A wireless charging system (1), comprising:
a flexible wireless charging device (2) comprising:
at least one thin-film transmitter coil assembly (21), the thin-film transmitter coil assembly (21) comprising a flexible substrate (211), an oscillation starting antenna (212), a resonant antenna (213), a first protective layer (214) and a second protective layer (215), wherein the flexible substrate (211) has a first surface (211a) and a second surface (211b) opposed to the first surface (211a), the oscillation starting antenna (212) is disposed on the first surface (211 a) of the flexible substrate (211), the resonant antenna (213) is disposed on the second surface (211b) of the flexible substrate (211), at least one capacitor (216) is connected between a first end (213a) and a second end (213b) of the resonant antenna (213), the oscillation starting antenna (212) is covered by the first protective layer (214), and the resonant antenna (213) is covered by the second protective layer (215); and
at least one transmitter module (22) electrically connected between the thin-film transmitter coil assembly (21) and a power source (5), wherein the at least one transmitter module (22) receives electric energy from the power source (5) and provides an AC signal to the thin-film transmitter coil assembly (21), wherein the AC signal is received by the oscillation starting antenna (212) of the thin-film transmitter coil assembly (21), and an electromagnetic wave with a specified resonant frequency is emitted in response to a resonant coupling effect of the resonant antenna (213) and the oscillation starting antenna (212); and
a power-receiving device (3) comprising:
a thin-film receiver coil assembly (31), wherein the thin-film receiver coil assembly (31) receives electric energy from the flexible wireless charging device (2) in response to a magnetic resonant coupling effect of the thin-film receiver coil assembly (31) and the thin-film transmitter coil assembly (21); and
a receiver module (32) connected with the thin-film receiver coil assembly (31) for converting the electric energy that is received by the thin-film receiver coil assembly (31).

14. The wireless charging system (1) according to claim 13, wherein the thin-film receiver coil assembly (31) of the power-receiving device (3) and the thin-film transmitter coil assembly (21) of the flexible wireless charging device (2) have same structures.

15. The wireless charging system (1) according to claim 13, wherein the receiver module (32) comprises:
a filtering circuit (321) electrically connected with the thin-film receiver coil assembly (31) for filtering an AC signal from the thin-film receiver coil assembly (31);
a rectifying circuit (322) electrically connected with the filtering circuit (321) for converting the AC signal into a rectified DC voltage;
a voltage stabilizer (323) electrically connected with the rectifying circuit (322) for stabilizing the rectified DC voltage to a stabilized DC voltage with a rated voltage value; and
a DC voltage adjusting circuit (324) electrically connected with the voltage stabilizer (323) and a load (3b) for adjusting the stabilized DC voltage to a regulated DC voltage and providing the regulated DC voltage to the load (3b).
